# EUROPEAN PATENT APPLICATION

(11) **EP 2 506 099 A2**
(43) Date of publication of application: **03.10.2012**
(21) Application number: 12002227.2
(22) Date of filing: 28.03.2012
(51) Int. Cl.: G05B 19/042

(54) **Intelligent rotor/stator system with energy recovery and energy recycling**

(30) Priority: 29.03.2011 IT AN20110040
(71) Applicant: Marini, Simone, 63812 Montegranaro (IT)
(72) Inventor: Marini, Simone, 63812 Montegranaro (IT)
(74) Representative: Cipolletti, Serena

(57) **Abstract**

The Invention is based on implementation of a Logic inside a Rotor/Stator device and/or a sensors and/or an actuators and/or an electronic devices connected to each other, which create a new family and a wide range of performance compared to those that this devices usually have

The main schematic (Fig5) shows a logic hardware like microprocessor or similar, one or more sensor (optional) one or more actuators (optional) one or more bidirectional communication ports (optional) one or more device for recovery/management/storage of electric power obtained by Rotor kinetics energy convertion (optional).

This Invention gives the technology for the creation of a new family of intelligent electro-mechanical devices capable of SELF ADAPTIVE behavior, REAL TIME COMMUNICATION and AUTO-REPAIR of their operating parameters, to make available to other devices that are connected to them, the computational resources or the electrical power supply internally generated.

## Description

### Invention background

### • Field of application of the invention

This invention deal with any machine which operates a conveyance of one ore more electrical signals from a rotating component to a fix one (Rotor/Stator)

### • State of the Art

Whenever it is necessary to convey an electrical signal through two devices, where there is a rotatory movement, current technology uses apparatuses which are based on the concept of electrical brushes and similar. The contact, which is garanteed by the brushes, allows to get the conveying characteristics of an electric cable. It also allows to introduce elctric losses and minimum qualities for the conveying signal, whichever it is.

These devices are commonly called Slip Ring too, and they are designed with several characteristics in order to satisfy all kinds of uses. They can contain some electrical and/or mechanical and/or magnetical contrivances to elaborate some information and to communicate to external devices the statuses of their activity (rotation, relative position of the rotor etc.). In this case it is possible to speak about families of apparatuses such as Resolver or Encoder or Decoder.

These machines are largely used in industry, both in professional and consumer environments.

We can use an electronic hardware to analyze some or more characteristics of the activity of these apparatuses (such as several families of sensors) - which are applied to the devices under discussion - in order to read and interpret the data of their activity. For this reason, some alterations are actuated, so that they are suited to the predisposition to some control and measure systems, inside or outside these devices.

The operation just described is observable in the following Industrial Patents: DE10031005A1 and DE102008028017A1. Most of these devices are classified as electromagnetical apparatuses (what they actually are), if you analyze their functional characteristics. Current technological research can generate instead, processes of integration with other techonolgies and develop an electromechanical device until it creates a new family of apparatuses with pecualir charatcteristics, which make them evolve from all the previous systems.

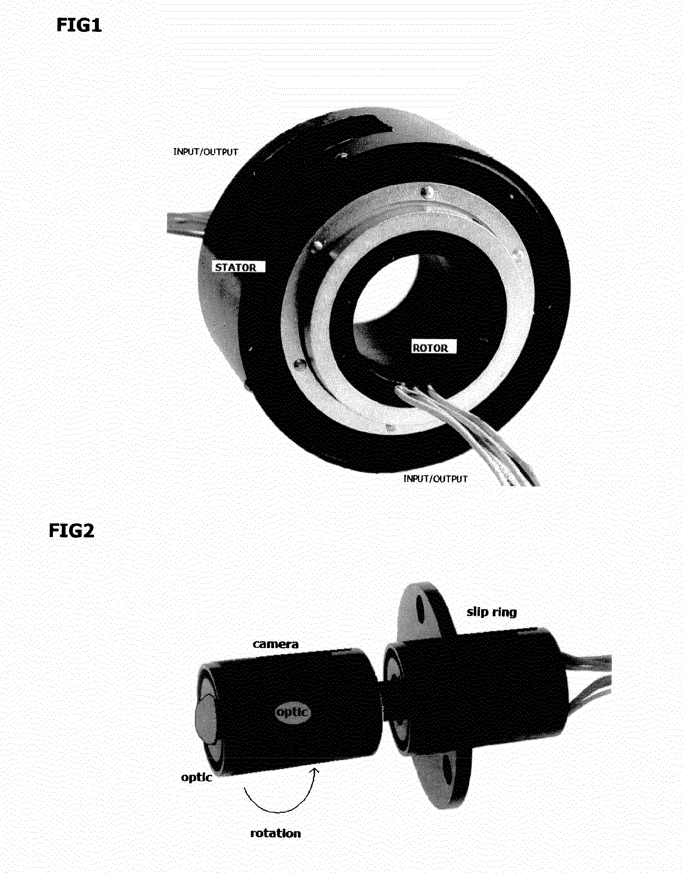

As an example of the current state of the art FIG 1 shows a device of the SlipRing family for the conveyance of electric signals of power supply and elctric signals in frequency.

The Rotor part of this system is fixed to a machine in motion (Fig2) and it is dragged with it by the mechanical motion. The mechanical energy of the rotation is conveyed to the SlipRing. The Stator part presents again that electrical connection, which had been proposed at the entry in the Rotor of the rotating machine: it has been created a connection of the electrical connection between the input signal to the Rotor and the output signal from the Stator. The connection is bidirectional.

Another example of SlipRing application is that of the example in FIG.2, where a brandeggiable, rotating videocamera has to stay connected to a power supply system and receive control signals and send video signals. Other examples are: a machine tool with a rotating spindle, which has to convey elctric information to a utilizer connected to it or an electric revolving door, where there are organs moving at 360 degrees and where the angular position of the mechanical components is communicated.

Other applications deals with those automations where it is necessary to have electric and/or optical signals passed thruough the rotating points.

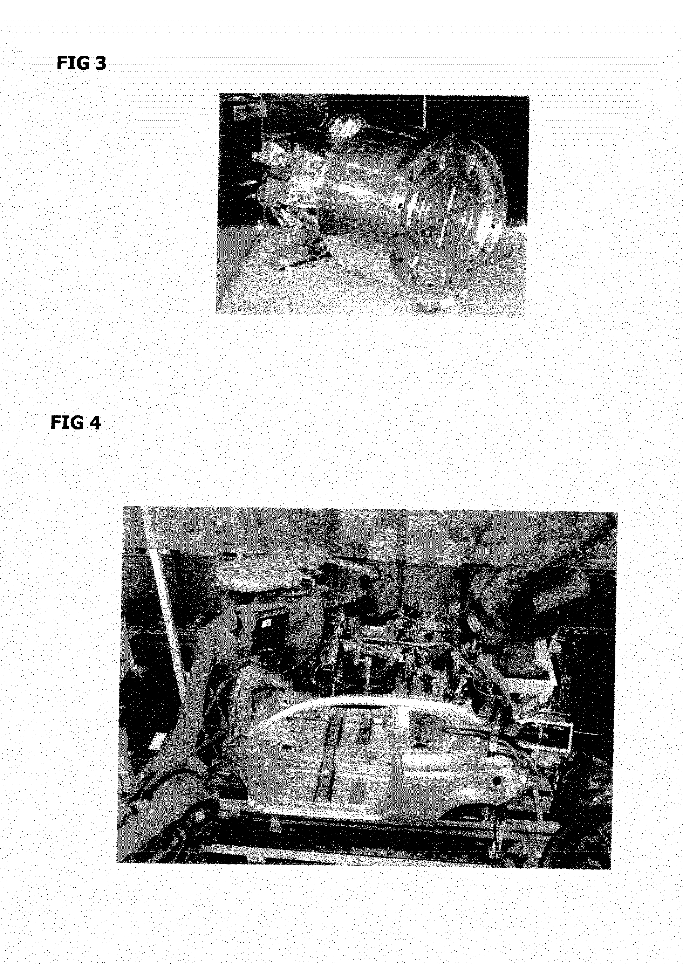

Some evolved applications could be in the apparatuses used for the recovery of the kinetic energy, such as, for example, what happens during motor races, thanks to the use of the so called "KERS" in FIG.3.

KERS word refers to a system that "instead of dispersing kinetic energy in the form of heat when the car brakes, it allows a partial recovery of kinetic energy in the form of mechanical or electric energy, which is still exploitable to draw the vehicle or to supply its electric devices." This apparatus necessitates an elctronic management of high level to work, which could be contained in the device and could make a self-diagnosis and could collect data of the working machine; in addition to the fact that it could allow a correction of some parameters of its working in real time.

In industrial field and in some industrial processes it is necessary to connect several Rotor-Stator devices together (they can be SlipRing, Encoder, Decoder, Resolver) in order to fulfil to the operations, which are required by more or less complex machines.

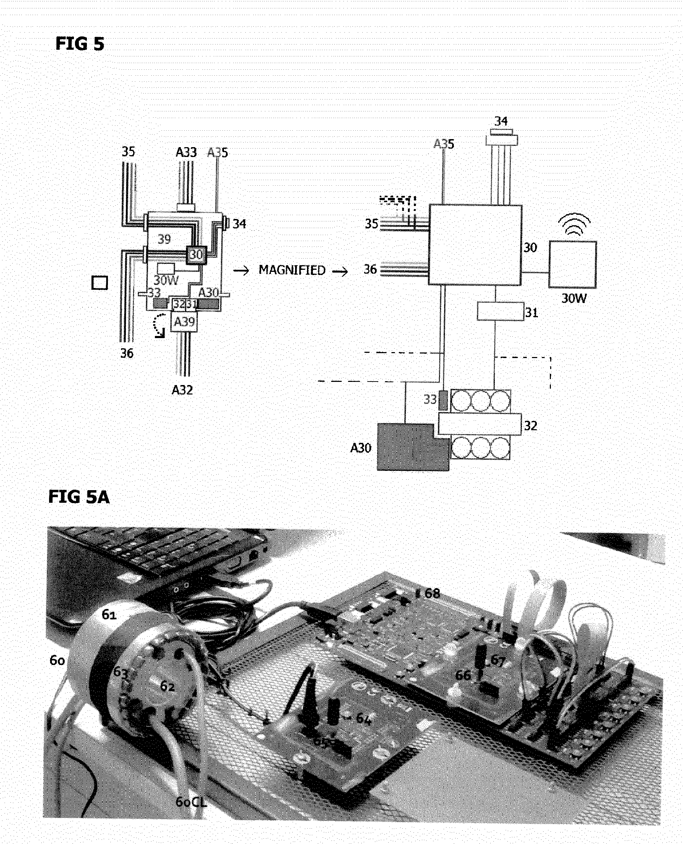

Examining for example the automated assembly line with skilled Robots in FIG.4, we realize that there are about ten machines operting in synchro and containing Rotor/Stator devices, which should share computational information and resources for their own manteinance, for the optimization of the manufacturing processes and for the streghtening of the performances. The basic architecture of the invention, which is summerized in the scheme of FIG 5, is based on the possibility to implement an electronic architecture, which is based on a logic of functioning inside the Rotor/Stator devices and on a series of several sensors, actuators and generators of Electromotive Force, which are skillfully connected to furnish a range of new performances, which can be wider than that these apparatuses usually have. The architecture of the basic scheme has a logical unit processor-type or similar, one or more sensor circuits (optional) one or more actuator circuits (optional) one or more external, bidirectional communication ports (optional), which are wired or wireless, one ore more devices for the recovery or the management or the storage of the electric power, which is obtained thanks to the conversion of the kinetic energy of the Rotor (optional).

The electronic device is supplied by the external electric line (optional) (A35) or by EMF, which is internally generated by a Dynamo (optional) (32) and is supervised by the block/blocks (optional) (31), which can adapt and/or store electric power. The processor (30) analyzes indications coming from the sensor/sensors (33) in real time (for example temperature, humidity, acceleration, internal climate, sparkle lighting, rotation speed, quality of the electric contacts, dust presence, frequency response, signals mask, etc), as a consequence it saves and sends the result of this processing in form of electric commands to the actuator/actuators (A30), in order to modify its performances and its basic features and then optionally to the communication ports or to the wireless communication device (30W). The just described circuit can be accomodated both inside the Rotor part and inside the Stator part (39) of the device (such as in this case).

In Fig 5A (picture) you can show the hardware and software development system of the Invention, where a SlipRing device - which is made up of a stator (61) and a rotor (62) - is internally provided with sensors, actuators and a dynamo (63). Therefore this Rotor/Stator device is provided with an intelligence, thanks to the elctronic architecture (64), and with a wireless module (65) to communicate with the Host, which also has a wireless interface and a series of peripherals for communication (68).

The communication lines (60CL) optionally allow the device the communication Rotor/Stator, the signalling and distribution of its energetic or computational resources.

The invention solves the problems concerning the limitations of these electromechanic apparatuses, i.e. the fact that they are only monofunction devices or that they have a only purpose. It casts a new light on the possibility to create a new family of apparatuses with independent decisional skills, which are also programmable on a large scale. This characteristic makes the device capable to adapt itself to changeable situations of working and makes it capable to intervene autonomously so that it can optimize its performances and signal them properly. Not only checks and analyses of this device are not related to its intrinsic activity, but it can also furnish processing, which are typical of other families of electronic apparatuses. Thanks to this invention these devices do not depend on an EXTERNAL logic of control, but they have internal skills - which come from the architecture of the invention - to exercise, in the very place of their activity, this range of functions. Moreover, the invention allows these devices to recover energy from their activity and to use it alternatively or as a computational resource or to reallocate it towards external utilizers, even from the same communication ports and data.

For all these reasons, it is clear that the invention operates NOT ONLY for the integration of new skills inside a Rotor/Stator apparatus, but it allows the creation of new families of devices. The target of this invention is to procol new high technological families of Stator/Rotor devices and to lay the basis for a new technological step concerning these devices.

According to the description of the Invention, the device can become more intelligent when it acquires data autonomously and when it interprets them according to a given programming. It can also act autonomously (on the base of a programming, which can be modified by the same device) to gain the pursued performances and targets, reprogramming itself autonomously, changing its performances and sharing its computational resources and the result of them with others.

### Analysis of the Energy Recovery

The possibility of an energy recovery is based on the idea of the dynamo. It is always possible to insert some polar expansions to the Stator in a Stator/Rotor element, and thanks to the movement of the Rotor it is also possible to create an Electromotive Force. The activity of the device is based on a rotation, which can be total and continuous or partial and discontinuous. In both cases the positioning of the typical elements of the dynamo always allows - at every change of the magnetic flux due to the rotation - to generate an Electromotive Force (EMF for short). In case of a desultory or partial rotation, the worst of the cases, the system can always intervene in the management of the generated power, thanks to an electronic SWITCHING power supply circuit and at the same time it can temporary accumulate this power in the elements of a battery or in the components with a high level electric capacity. Once it has been established a treshold (programmable) beyond that the generated power is really "useful" and "significant", the electronic technology for supplies, which is called SWITCHING; can furnish a correct management, a high-yield and a minimum loss. So even in an application, where the device is submitted to a kind of work with a desultory, partial rotation, it can generate a little power, which can be useful to execute a computational work of management, of computation, of checking , and other uses which will be explained in succession.

Instead, when a rotation is continuous, the system can be assimilated to a dynamo and the management of the SWITCHING circuit power can be simplified further.

These considerations come from the analysis of the application of the Stator/Rotor circuits. In most of the applications the kinetic energy, which is furnished to the device for the rotation, can be superfluous for the real necessity of the whole equipment. In this way even a reuse of it can be logistically profitable for the whole system, once it has been converted in electric energy again inside the Rotor/Stator device. In fact, it is possible that a Rotor/Stator system is temporary unused, but it continues to turn mechanically. Then it is possible that the recovered energy is used in situations where it is necessary to manage a state of temporary interdiction, for example to disconnect input and output electrically, to disconnect the connection between brushes and conductive rings in order to extend the life of the device.

In succession, Invention advantages:
1) The invention creates a new family of Rotor/Stator devices with an integrated technology with basic-internal-electronic-architecture without precluding those electromechanic characteristics that the devices already have.
2) The invention allows the devices to acquire information about their activity in real time and to correct any possible anomaly of its activity or to correct electrical signals parameters, which pass through it, in order to optimize the device activity, to extend its lifetime or to perform correlated actions with a complete autonomy, reprogramming itself, modifying its performances, to disable itself in an emergency etc., communicating promptly this series of data outside and/or storing them to allow the functioning analysis of the device in real time or a possible data collection for the statistical corruption processing.
3) The Invention allows to generate EFM for its energy demand and/or to redistribute them to devices, which necessitate them both as computational resources an as EFM, using the same communication and data ports, when they are available.
*4)* On the basis of the invention characteristics, the new family of Rotor/Stator devices allows the rising of a wide range of CUSTOM devices at the exact moment of the industrial application, even if they are furnished with the same hardware we have already described in the invention, they autonomously adapt themelves to the functional targets and they effectively integrate capacity inside the same device, they also comprehend those solutions related to the subject of the energy conservation and its optimization and/or distribution.

### Fields of Application

We can quote, as examples of some fileds of application of the invention:
1) Robotics
2) Assembly lines concerning Production lines.
3) Rotating System for Windturbines.
4) System of videosurveillance.
5) Automotive.
6) Components of Stator/Rotor according to the Invention, which is dedicated for specific industrial necessities (according to the Invention the Stator/Rotor can become CUSTOM for each different application, even if it has the same hardware and software).
7) General Electromechanics.

Hence it comes out that TWO families (Family A and B) of devices operate picking up electric energy from outside, while another additional family has the same characteristics of the first two ones, but it can generate EFM thanks to the rotation of the device, to alimentate its own internal circuits.

The first two families distinguish each other for their performances: Family A analizes some parameters and it acts in an intelligent way according to them, Family B works out external parameters too, according to the necessities of the systems, which are connected to it, placing its own resources at disposal of those processes which are not connected to its status or to its work.
1) Family A: Rotor/Stator devices with internal sensor-circuits, which can determinate the functioning statuses of the device (speed, temperature, wear and tear, humidity, quality of the input/output answer, acceleration, position, dust presence, signals mask, composition of the internal atmosphere etc.) and basic electronic architecture with uP based programmable logic or similar aimed to determine, report and process all these parameters in order to send INSIDE THE DEVICE commands to actuators or electronical circuits which can change, improve, react to information gathered and saved by the internal logic in order to keep and/or improve and/or disable their own performances. These signals are also apt to determine parameters which provide to the OUTSIDE statistic, objective, computed and estimated data about their own work in real or mediate time.
2) Family B: Stator/Rotor devices containing sensor circuits which can determine the functioning state of the device (speed, temperature, wear and tear, quality of the input/output response, acceleration, position, dust presence, electrical signals mask, composition of the internal atmosphere ecc.) and uP based programmable logic or similar aimed to determine, report and process all these parameters in order to send INSIDE OR OUTSIDE the device commands to actuators or electronical circuits which can change, improve, react to information gathered and saved by the internal logic in order to keep, and/or improve and/or disable its own performances and elaborate at the same time information and/or signals coming from the outside and not connected to the same logic of the input/output signals of the very same device. As a consequence the equipment operates also on input and output processes, which are optionally provided and not endowed with link of any kind with the same device functioning. Likewise the device can send out SYNCHRONIZED signals towards the optional ports and which are managed by the same device.
3) Families A and Families B containing within a DYNAMO system and optionally furnished with a functioning logic in the management of the generated EMF that makes them independent from an external power source and able to use it (EMF) according to the capabilities of the same Families, as well as REDISTRIBUTE IT OUTSIDE the device when it is not used by proper communication ports or by the same signalling and data communication ports of the very same device. As a consequence the following results are emerging from this analysis:
   Family - A - with or without Dynamo for EMF generation
   Family - B - with or without Dynamo for EMF generation.

### Analysis of the families and relative examples.

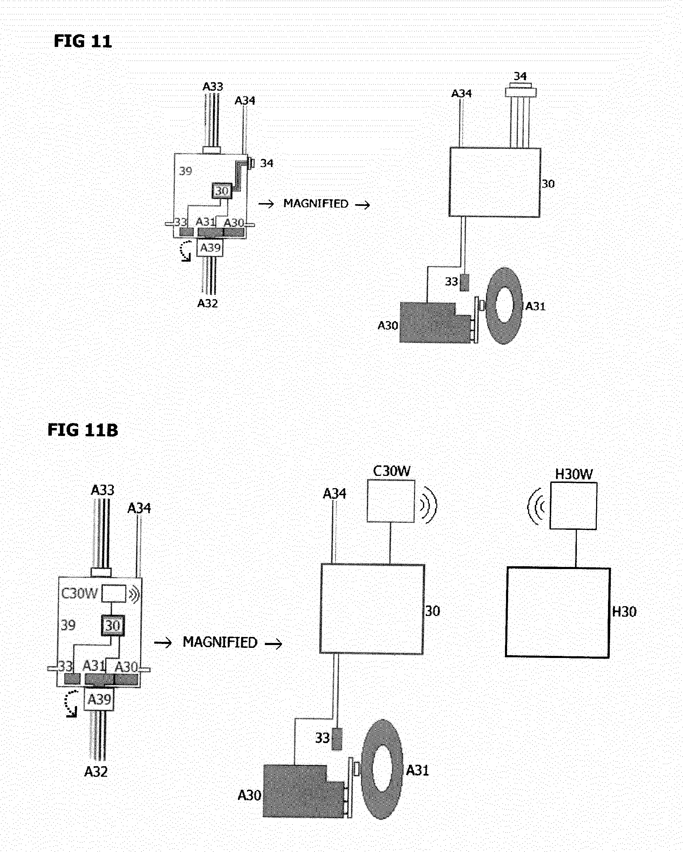

FIG 11 Family A type WITHOUT Dynamo for EFM generation. Functioning parameters self-healing system.
30 Microprocessor based circuit
33 Generic sensor
34 Bi-directional communication port
A32-A33 Input output signals from the device
A34 External power supply line
39 Stator
A39 Rotor
A31 Brush
A30 Actuator.

Thanks to computational resources of the processor (30) electrically powered by the external supply line (A34) the device analyzes all instructions coming from the sensors in real time (33) then it sends the result of data processing to an actuator (A30) which modifies some specific characteristics of the device functioning in real time. This Reaction Loop can attend to solve an unexpected problem (as for example the performance weakening due to a failure or usury) or it can attend on a command in order to modify all performances within a range of pre-programmed performances. The actuator can, for example, modify the brushes contact force in order to change the same contact surface so as to implement the signals transmission band or implement its electric conductivity or disable its own functions if an emergency state is rising. The device can communicate some functioning parameters outside through ports (34- A33-A32).

Communication towards outer devices can also be made through wireless connections (fig.11b) where the "client" processor is transmitting through a wireless block (C30W) a series of data which can be remote-processed as showed, to a "host" processor endowed with a wireless port (H30W). The described circuit can be allocated both inside the Rotor part (A39) of the device and inside the Stator part (39) of the device (just like in this case).

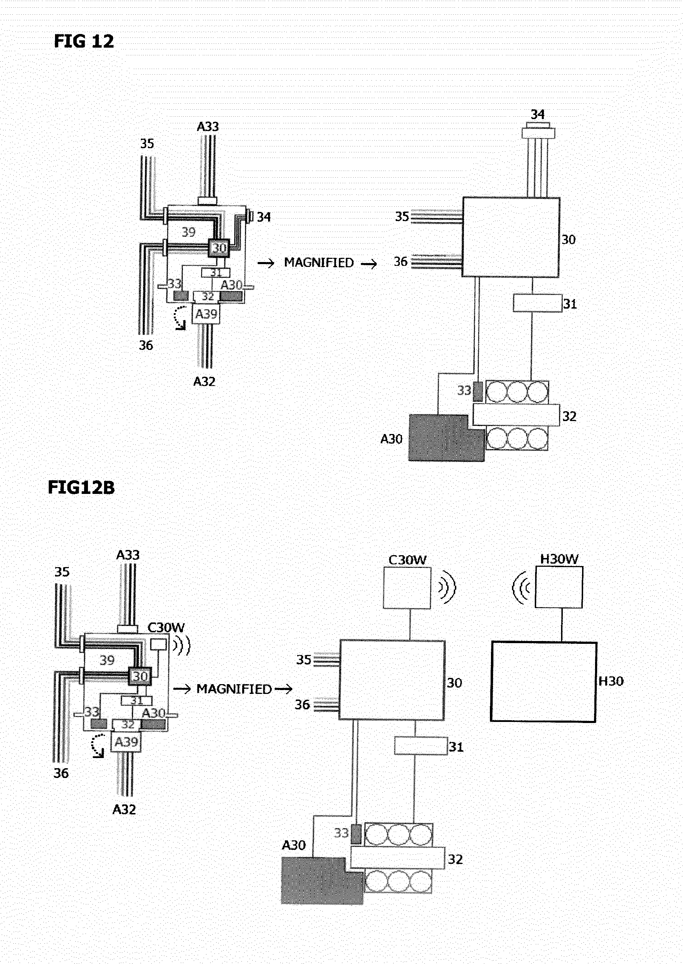

Fig.12 Family A type WITH Dynamo for EMF generation. Self-correction system of functioning parameters and external communication.
30 Microprocessor based circuit
31 EFM power supply management
32 Dynamo
33 Generic Sensor
34 Bi-directional communication port
A32-A33 Input and Output signals from the Device
39 Stator
A39 Rotor
35-36 Communication ports
A30 Actuator

Thanks to computational resources of the processor (30) electrically powered by the EMF, which is generated within from the Dynamo (22) and managed by the block (31), the device analyzes all reports coming from sensors (33) in real time then it sends the result of data processing to an actuator (A30) which modifies some specific characteristics of the device activity in real time (example). This "Reaction Loop" can attend to solve an unexpected problem, for example the actuator can modify the brushes contact force in order to change the contact surface of them so as to implement the signals transmission band or improve its electric conductivity, or it can disable its own functions if an emergency state is rising, or it can attend on a command in order to moderate all performances within a range of pre-planned performances. The device can communicate some functioning parameters outside through ports (34-35-36-A33-A32). Communication towards outer devices can also be made through wireless connections (Fig.12B) where the "client" processor is transmitting through a wireless block (C30W) a series of data which can be remote-processed as showed, with a "host" processor (H30) endowed with a wireless port (H30W). The described circuit can be allocated both inside the Rotor part (A39) of the device and inside the Stator part (39) of the device (just like in this case).

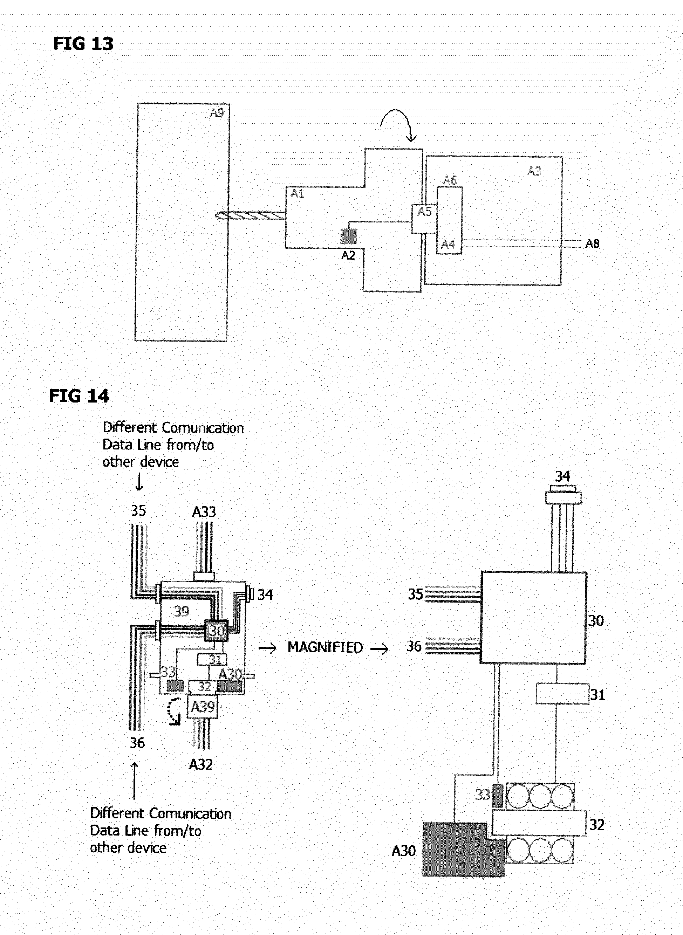

For example, in Fig.13, the rotating device of a mandril (A1), which is part of the machine (A3) to which is connected a tool (in this case a drill operating on the object A9), is containing a sensor (A2) (an acceleration sensor for example) that conveys its own data over the communication line (A8) through the slip ring (A6) composed of the Stator part (A4) and Rotor part (A5). The SlipRing endowed with the technology of family A of the invention internally control his functioning parameters in order to ensure an excellent signal transmission quality of the sensor and/or communicate and/or foretell its malfunctioning through the line (A8). At the same time, thanks to the invention, its internal logic make possible to change some functioning parameters to recover some weakened performances because of usury of the wiping contacts for example. So the SlipRing (A6) is capable to heal itself thanks to the technology of the Invention. This makes possible, for the overall machine (A1 and A3), an advance warning of a probable damage and a real-time estimation of its own working quality. The malfunctioning anticipation can be made, for example, through a counter implemented within the logic of the SlipRing (A6) through an internal temperature sensor which supervises the wiping contacts temperature and through an accelerometer which supplies data about the forces applied to the machine and/or an internal light sensor which notices the presence of an excessive quantity of sparks (extra-opening and extra-closure currents) which are harmful phenomena to electrical contacts of the SlipRing.

This is just an example of how to know the Life-Cycle of the device (A6). Fig. 14 Family B type WITH Dynamo for EMF generation. External data processing and communication system
30 Microprocessor based circuit
31 EMF power supply management
32 Dynamo
33 Generic Sensor
34 Bi-directional communication port
A32-A33 Input and Output signals from the Device
39 Stator
A39 Rotor
35-36 Communication ports towards connection matrices
A30 Actuator

Thanks to computational resources of the processor (30) electrically power-driven by the EMF generated within from the Dynamo (32) and managed by the block (31), the device real-time analyzes all reports coming from sensors (33) then it sends the result of data processing to an actuator (A30) which real-time modifies some specific characteristics of the device functioning (example). This "Reaction Loop" can attend to solve an unexpected problem (as for example the performance weakening due to a failure) or it can attend on a command in order to moderate all performances within a range of pre-planned performances.

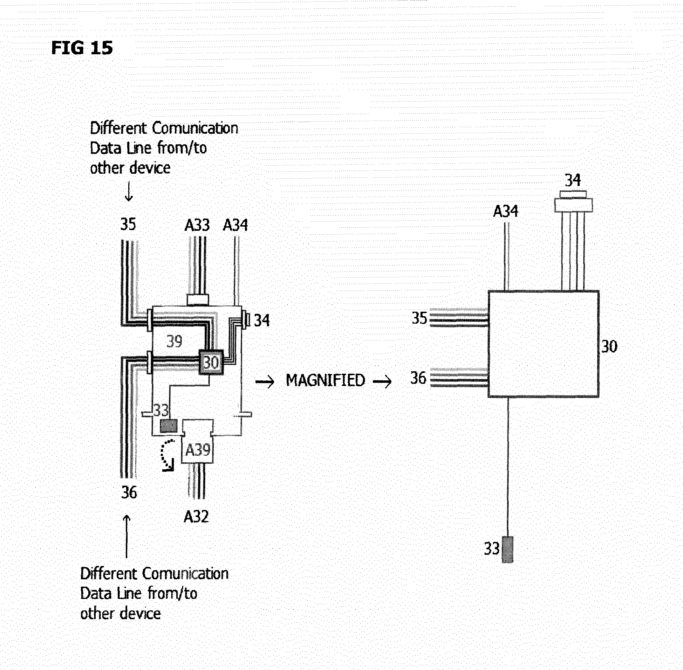

The device MAKES USE OF THE DYNAMO-PRODUCED ENERGY (32) AND IT IS MANAGED FROM THE BLOCK (31) TO FULFIL TWO OTHER FUNCTIONS:
A) AS COMPUTATIONAL RESOURCE TO BE APPLIED THROUGH COMMUNICATION LINES (35-36) TO OTHER EXTERNAL DEVICES WHOSE TASK IS NOT CONNECTED WITH THE ONE OF THE DEVICE THAT IS BEING DISCUSSED.
B) TO REDISTRIBUTE THROUGH THE LINES (35-36) DYNAMO-GENERATED ELECTRIC POWER (32) AND MANAGED BY THE BLOCK (31) TO THE CONNECTED EQUIPMENTS (35-36) WHICH NEED THIS POWER. THIS HAPPENS IF THE MENTIONED DEVICE NOTES AN EXTRAPOWER AND/OR POWER CAPABILITY AVAILABLE OR IF IT IS NOT USING IT TO FULFIL ITS OWN TASKS. The described circuit can be allocated both into the Rotor part (A39) of the device or inside the Stator part (39) of the device (just like in this case). Fig.15 Family B type WITHOUT Dynamo. External data processing and communication system.
   30 Microprocessor based circuit
   33 Generic Sensor
   34 Bi-directional communication port
   A32-A33 Input and output signals from the Device
   A34 External power supply line
   39 Stator
   A39 Rotor
   35-36 Communication ports to connections matrices.

Thanks to computational resources of the processor (30) electrically powered by the external line (A34), the device real-time analyzes all reports coming from sensors (33) then it sends the result of data processing to an external communication line(34-A32-A33-35-36) The device MAKES USE OF THE POWER SUPPLIED LINE (34) TO FULFIL TWO OTHER FUNCTIONS:
A) AS A COMPUTATIONAL POWER TO BE INVESTED AS COMMUNICATION LINES (35-36) FOR OTHER EXTERNAL DEVICES, WHOSE TASK IS NOT CONNECTED TO THE WORK OF THE CONSIDERED DEVICE.
B) TO REDISTRIBUTE THROUGH THE LINES (35-36) THE ELECTRIC POWER WHICH IS AVAILABLE FROM THE LINE (A34) TO THE CONNECTED APPARATUSES (35-36) WHICH NEED THIS AVAILABLE ENERGY. THIS HAPPENS IF THE MENTIONED DEVICE NOTES AN AVAILABLE EXTRAPOWER OR IF IT IS NOT USING IT TO FULFIL ITS OWN TASKS.

The described circuit can be allocated both inside the Rotor part (A 39) of the device and inside the Stator part (39) of the device (like in this case).

### ADDITIONAL CONSIDERATIONS ABOUT INVENTION EFFECTS

The analysis of intelligent devices concerning the management of the power supply as a computational resource or as generation and redistribution outside it, lead to the creation, in some application of interconnected devices, of an intelligence, which is distributed and configurated in real time (it can be programmed or it can interpretate sensible data autonomously) and it is used to optimize the available energy resources. The invention allows the technology of an electromechanic device to migrate towards another family of devices with a remarkable value added, which can adapt themselves to the functional aims and with performances and skills beyond the real state of the art.

The invention makes this family/families of electromechanic components come closer to the characteristics of the electronic components.

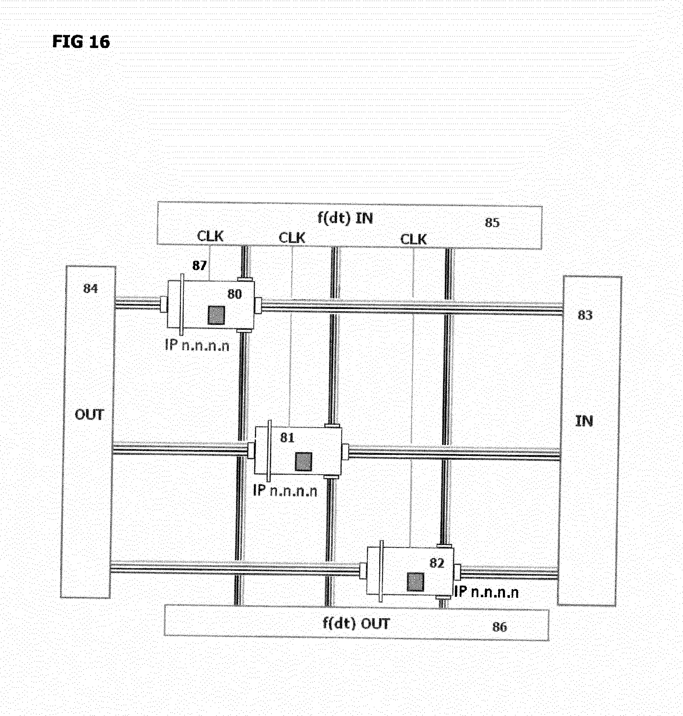

As for example in FIG.16, a Network of devices belonging to Family B WITH or WITHOUT Dynamo for generation of internal EFM. The scheme is about the principle of redistribution in real time of the computational capacity where necessary and of power supply where necessary.

The devices of the general Stator/Rator family (80-81-82) work with their own input (83) and output (84), but at the same time they can perform a kind of work not concerning or partially concerning secondary input (85) and secondary output (86). It is on these secondary line that it is possible the redistribution of EFM, when it is generated by the systems (80 and/or 81 and/or 82) or the redistribution of computational resources and/or data signalling and every kind of communication.

The systems optionally have a temporal connection reference (87), which is distributed or regenerated and allows every kind of Synchronical functioning and a series of I.P n.n.n.n. addresses (or other address or protocol).

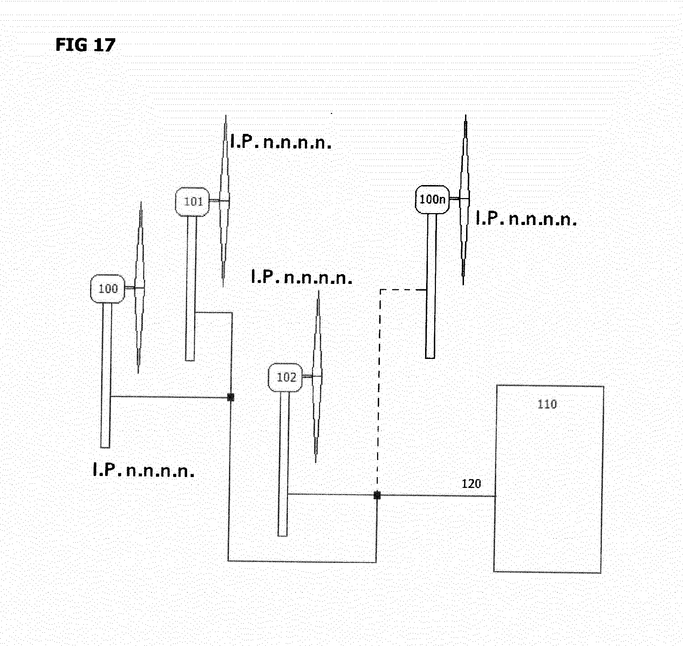

As an example of this configuration, in FIG.17 the wind farm, with single generators (100) (101) (102) (100n), which are connected each other through a wired or wireless communication network, thanks to the technology of the invention inside the Stator/Rotor devices they have, integrates a remarkable computational resource (either it is of windturbines uniquely or it is of all generators), which can be shared in the network thanks to the access (106).

This resource can be conveniently used to optimize the functioning of the wind farm (for example you can monitor and correct some parameter of the Rotors/Stators of the generators) or for another wind farm, which is connected to this network, or for different purposes, on the condition that they are shared by the network (106). What has been created is a "distributed-intelligent" device with a wide range of applications, some intrinsic potentiality, which can be easy shared for a lot of purposes, and some autonomous skills of management, verification, improvement of its performances. The control logic and the single computational resource of each apparatus (100) (101) (102) (100n), which is contained in the Stator/Rotot device, thanks to the invention, can also work in a dissociated way, adapting, signalling, modifying and reacting to its own contingent situations or to the claims of the network. As example of the capacities of this invention, it is possible to imagine that the logic of the devices of the Invention can contain a TCP/IP protocol, which addresses each Stator/Rotor device through the IP n.n.n.n. addresses and make a remote control of the whole wind farm. This function will be integrated in the Stator/Rotor devices and in the central management electronics, giving them a remarkable additional value on a technological level.

### TABLE

According to the explanation of the invention, you can compile a table about the state of the art and about the news the invention has just introduced in the field of the application of Stators/Rotors.

| DESCRIPTION | STATE OF THE ART | "A" Family | "B" Family |
|---|---|---|---|
| *Electric Rotor*/*Stator device (brush tecnology) or optic* | yes | ✔ | ✔ |
| *Electric Rotor*/*Stator device (brush tecnology) or Optic with sensors and logic* | yes | ✔ | ✔ |
| *Electric Rotor*/*Stator device (brush tecnology) or Optic with sensors and programmable intelligence on board and electro-mechanical self-adaptive tecnology* | NO | ✔ | ✔ |
| *Electric Rotor*/*Stator device (brush tecnology) or Optic with sensors and programmable intelligence on board and shared computational resources* | NO | | ✔ |
| *Electric Rotor*/*Stator device (brush tecnology) or Optic with sensors and programmable intelligence on board with energy recovery* | NO | optional ✔ | optional ✔ |

### CONCERNING PATENTS

DE10031005 A1
DE102008028017A1

## Claims

1. Rotor/Stator device based upon Slip Ring, Encoder, Decoder and Resolver which by mean of slipping contacts and/or optic coupling and/or magnetic coupling allows to transmit signals of different type as electrical/optical/magnetic from stator (Fig.5 - 39) to rotor (Fig.5 - A39) and vice versa, which has internally embedded a programmable unit logic (Fig.5 - 30) based upon uP, DSP or CPLDs, ASIC and FPGAs and provided by a functionality block (Fig.5 - 31) capable to store/adapt externally provided power supply (Fig.5 - A35). This device is capable to process data to autonomously program and disable its functional parameters, capabilities, base functions by processing information provided by internal sensors (Fig.5 - 33) which can monitor the Rotor/Stator operational state (speed, electrical contacts state by sparks produced, temperature, work load, humidity, quality input/output response, acceleration, position in space, dust presence, internal atmosphere, signal mask). All parameters reconfiguration is performed simultaneously by all internal integrated actuators (Fig.5 - A30) which are executing commands and instructions sent by the embedded programmable unit control (Fig.5 - A30) or external communication port (Fig.5 - A32-A33-34).

2. Rotor/Stator device based upon Slip Ring, Encoder, Decoder and Resolver which by mean of slipping contacts and/or optic coupling and/or magnetic coupling allows to transmit signals of different type as electrical/optical/magnetic from stator (Fig.5 - 39) to rotor (Fig.5 - A39) and vice versa, which has internally embedded a programmable unit logic (Fig.5 - 30) based upon uP, DSP or CPLDs, ASIC and FPGAs and provided by a functionality block (Fig.5 - 31) capable to store/adapt power supply internally generated by Dynamo or other similar device and capable to act as power manager by its internal architecture which will allow to manage the power based on internal needs.

3. Rotor/Stator device based upon Slip Ring, Encoder, Decoder and Resolver which by mean of slipping contacts and/or optic coupling and/or magnetic coupling allows to transmit signals of different type as electrical/optical/magnetic from stator (Fig.5 - 39) to rotor (Fig.5 - A39) and vice versa, which has internally embedded a programmable unit logic (Fig.5 - 30) based upon uP, DSP or CPLDs, ASIC and FPGAs and provided by a functionality block (Fig.5 - 31) capable to store/adapt power supply internally generated by Dynamo or other similar device and capable to switch the analogue/digital data communication ports (Fig.5 - A32, A33, A35) into remote power feeding lines allowing to distribute and share the internally generated power supply.

4. Rotor/Stator device based upon Slip Ring, Encoder, Decoder and Resolver which by mean of slipping contacts and/or optic coupling and/or magnetic coupling allows to transmit signals of different type as electrical/optical/magnetic from stator (Fig.5 - 39) to rotor (Fig.5 - A39) and vice versa, which has internally embedded a programmable unit logic (Fig.5 - 30) based upon uP, DSP or CPLDs, ASIC and FPGAs and provided by a functionality block (Fig.5 - 31) capable to store/adapt power supply internally generated by Dynamo or other similar device (Fig.5 - 32) where its embedded processing capabilities allow to process internal data and external data (Fig.5 - 35, 36) through the I/O serial data port (Fig.5 - A32, A33). The system is then capable to process and/or store and/or transmit through wireless o wire (FIG.5 - 30W) connections to a remote host the above data to be used for different purpose than the I/O signals (Fig.5 - A32, A33) in/out to/from the Rotor/Stator device being part of an interconnected network (Fig. 16 e Fig. 17).

5. Rotor/Stator device based upon Slip Ring, Encoder, Decoder and Resolver which by mean of slipping contacts and/or optic coupling and/or magnetic coupling allows to transmit signals of different type as electrical/optical/magnetic from stator (Fig.5 - 39) to rotor (Fig.5 - A39) and vice versa, which has internally embedded a programmable unit logic (Fig.5 - 30) based upon uP, DSP or CPLDs, ASIC and FPGAs and provided by a functionality block (Fig.5 - 31) capable to store/adapt power supply provided by the socket power connection (Fig.5 - A35) of the internal sensors (Fig.5 - 33), actuators (Fig.5 - A30) and communication ports (Fig.5 - 34, 35, 36, A32, A33) using wireless o wire bearer (FIG.5 - 30W) which, by a protocol like TCP/IP o similar (FIG 16 e Fig. 17), shall allow to communicate with other stator/rotor devices described in this patent.
